# EUROPEAN PATENT APPLICATION

(11) **EP 2 667 330 A2**
(43) Date of publication of application: **27.11.2013**
(21) Application number: 13161291.3
(22) Date of filing: 27.03.2013
(51) Int. Cl.: G06N 5/02

(54) **Apparatus, and associated method, for slicing and using knowledgebase**

(30) Priority: 23.05.2012 US 201213478306
(71) Applicant: BlackBerry Limited, Waterloo, ON N2K 0A7 (CA)
(72) Inventor: Alemzadeh, Milad, Waterloo, Ontario N2L 3W8 (CA); Shenfield, Michael, Richmond Hill, Ontario L4C 3S9 (CA)
(74) Representative: Hibbert, Juliet Jane Grace

(57) **Abstract**

An apparatus, and an associated method, slices a knowledgebase into a knowledgebase portion and stores the knowledgebase portion at a device, such as a smart phone or tablet computer. The sliced knowledgebase is accessed to obtain a current mindset of a user of the device.

## Description

The present disclosure relates generally to a manner by which to provide for current mindset determination at a device, such as a standalone smart phone, tablet computer, or other communication device. More particularly, the present disclosure relates to an apparatus, and an associated method, by which to select a portion of a knowledgebase to be stored at the device and to utilize the knowledgebase portion to determine the current mindset.

Determination of the current mindset is permitted without requiring the device to access to a remote location to obtain the mindset. The need to provide bandwidth to communicate with a remote location is obviated, and improved response time results as the knowledgebase portion is maintained at the device.

### Background

Recent years have been witness to dramatic growth and use of data networks. A data network provides interconnectivity between devices that form part of, or are permitted access to, the network. The Internet, a publicly-accessible data network, for instance, provides nearly universal access. Many communication and information retrieval services are available by way of the Internet. Access to the Internet is permitted both by way of wired connections and by way of radio connections.

Connectivity to the Internet, or other data network, is available to wireless devices, such as smart phones, tablet computing devices, and personal digital assistants by way of radio connections. Radio channels are utilized upon which to send and to receive data. The radio channels are, for instance, allocated pursuant to operation of a radio communication system to which the wireless device is permitted access.

Radio bandwidth available to a radio communication system is typically limited, and the bandwidth limitation sometimes constrains communication capacity in a radio communication system. The capacity constraint might result in denial of access to the communication system, delay in communications, or other deleterious effect to the resultant communication service. Wired networks are also sometimes constrained by bandwidth limitations. A service that requires access to a remote database might, therefore, be deleteriously affected or wholly unavailable if bandwidth constraints interfere with the availability of the channels to communicate thereon to carry out the service.

A data service is an exemplary service carried out by way of a data network. A knowledgebase is sometimes accessed to obtain desired information. Topic of interest detection, e.g., is a service that accesses a database. Existing mechanisms by which to carry out a topic of interest detection, or other service that necessitates access to a knowledgebase, therefore, is dependent upon the availability of access to the knowledgebase. Availability of bandwidth to permit access to a remote knowledgebase is required. As the availability of acceptable channel connectivity can sometimes not be guaranteed, availability of the service or access to the knowledgebase correspondingly sometimes cannot be guaranteed.

It is in light of this background information related to access a knowledgebase that the significant improvements of the present disclosure have evolved.

### Brief Description of the Drawings

Figure 1 illustrates a functional block diagram of a communication system at which an implementation of the present disclosure is connected.

Figure 2 illustrates an exemplary process of an implementation of the present disclosure.

Figure 3 illustrates another exemplary process of an implementation of the present disclosure.

Figure 4 illustrates another exemplary process of an implementation of the present disclosure.

Figure 5, 6, and 7 illustrate tables representative of exemplary knowledgebase configurations used, and formed, pursuant to operation of an implementation of the present disclosure.

Figure 8 illustrates a graphical representation of slicing statistics, illustrating an exemplary relationship between the size and radius of a knowledgebase.

Figure 9 illustrates a graphical representation of slicing performance, illustrating an exemplary relationship between slicing performance and radius size of the knowledgebase slice.

Figure 10 illustrates a functional block diagram of a communication device of an implementation of the present disclosure.

Figure 11 illustrates a functional block diagram of an exemplary implementation of a slicing unit of an implementation of the present disclosure.

Figure 12 illustrates a method flow diagram of the method of operation of an implementation of the present disclosure.

### Detailed Description

The present disclosure, accordingly, advantageously provides an apparatus, and an associated method, by which to provide for current mindset determination at a device, such as a standalone smart phone, tablet computer, or other communication device.

Through operation of an implementation of the present disclosure, a manner is provided by which to select a portion of a knowledgebase to be stored at the device and to utilize the knowledgebase portion to determine the current mindset.

In one aspect of the present disclosure, the determination of the current mindset is permitted without requiring access to a remote device to obtain the mindset. Mindset determination is available, thereby, at a standalone device. The standalone capability obviates the need to provide bandwidth to communicate to a remotely-positioned knowledgebase. Improved response time results as the context extraction does not require communication with a remotely-positioned knowledgebase.

In another aspect of the present disclosure, a context extraction system with a customized, sliced knowledgebase that runs locally on a device is provided. The system processes user entries during a time frame, compares the user entries with the customized, sliced knowledgebase, calculates the best matched topics, and returns the topics, which form the current mindset.

In another aspect of the present disclosure, the current mindset is provided to subscribing services and applications used to trigger services or applications. If there are no service subscriptions available, the system is dormant.

In another aspect of the present disclosure, the knowledgebase is tailored to the subscribing services and, thereby, permits a large knowledgebase to be sliced into a knowledgebase portion, i.e., a sliced knowledgebase, that is of significantly reduced size relative to the entire knowledgebase.

In another aspect of the present disclosure, a selection of the knowledgebase portion is performed offline to prepare the sliced knowledgebase that is installed and maintained at the device to permit standalone context extraction operations to obtain a priori information that is used to prepare a proper knowledgebase subset of a main knowledgebase. The information is, e.g., provided by applications and services that are subscribed to utilize mindset detection results. Installed applications and services have access to a list of available mindsets. A choice is made, such as during design or installation of the applications and services, as to which mindsets are of interest. A subscription is made such that, whenever a mindset has been detected by the system, the subscribed application and service is notified or launched.

In another aspect of the present disclosure, the context extraction provides a current mindset. The current mindset is associated with one or more interrelated topics of interest during a time period. A mindset, in one implementation, is interpreted to be a combination of concepts. Operation is configured to detect short-term mindsets or long-term mindsets. Short-term and long-term mindsets are generally indicative of time periods of interest. A short-term mindset for instance, pertains to a relatively brief period in which entered bursts of information are utilized, whereas a long-term mindset pertains to a lengthier time window, e.g., twelve hours or longer.

In another aspect of the present disclosure, the current mindset of a user of the device is ascertained through interaction between the user and the device. For instance, user-entered key strokes or indications of web pages accessed by the user are used to define inputs that are used to ascertain the current mindset. The entered key strokes include, e.g., key strokes used to form a text message, a note, an email, a web query, and selection of a device application.

In another aspect of the present disclosure, the entered information is matched with the sliced knowledgebase, such as by a matching unit that matches indications of the entered information with the contents of the sliced knowledgebase to determine a best-possible mindset. The mindset selected as the best-possible mindset forms a current mindset. The current mindset is used pursuant to operation of the subscribed applications and services.

Because the knowledgebase is reduced in size by slicing the knowledgebase to form a knowledgebase portion, the knowledgebase portion is of a size permitting its storage and maintenance at a device. During operation, a current mindset of a user of the device is obtained. Access to a remote location to access a remote knowledgebase is obviated. Operation is thereby permitted when access to a remote location is unavailable. Additionally, time delay is associated with accessing a remotely-positioned knowledgebase is eliminated.

In these and other aspects, therefore, an apparatus, and an associated method is provided for facilitating mindset detection at a device. A memory element is embodied at the device and is configured to store a portion of a knowledgebase. A matcher is configured to match an indication of user entries with a relevant part of the portion of the knowledgebase. A match identified by the matcher forms a current mindset.

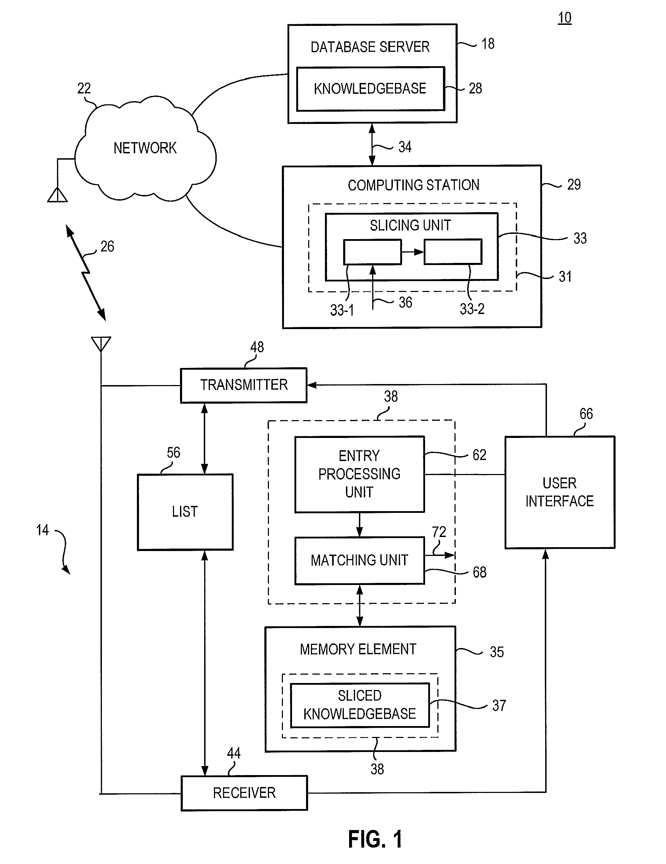

Turning first, therefore, to Figure 1, a communication system, shown generally at 10, provides for communication connectivity between a set of devices, here a communication device 14 and a database server 18. The devices 14 and 18 are placed in communication connectivity with a network 22. In the exemplary implementation shown in Figure 1, the network 22 forms both a wired, data portion and a radio network portion. In the exemplary implementation, radio channels, here represented by the arrows 26, provide for communication connectivity between the device 14 and the network 22. In an alternate implementation, the device 14 is connected to the network 22 by way of a wired connection or is directly connected to the database server 18. That is to say, in an alternate implementation, the device 14 is placed in connectivity with the server 18 by way of a wired connection.

The database server 18 is representative of a device that stores or maintains a knowledgebase 28. The knowledgebase is, for instance, an exhaustive set of knowledgebase items, formed of multiple portions.

The database server 18 is accessible by the device 14 and by other network-connected devices, such as the computing station 29. The computing station includes an apparatus 31 of an implementation of the present disclosure. The apparatus 31 is functionally represented in the Figure 1, and is implementable in any desired manner, including hardware, firmware, and software implementations. In one exemplary implementation, the apparatus 31 is implemented by processing activity that executes program code. The apparatus 31 here includes a slicing unit 33. In one exemplary implementation, the slicing unit is directly connected to the server 18, indicated by the line 34. The slicing unit includes a slicing criteria selector 33-1 and a knowledgebase slicer 33-2. Operation of the apparatus 31 provides for preparation of a knowledgebase portion, i.e., a subset of the knowledgebase 28 or a knowledgebase slice. In the exemplary implementation, once formed, the knowledgebase portion is stored at the memory element 35 of the device 14. The creation of the sliced knowledgebase, i.e., performance of the slicing operations to form the sliced knowledgebase, is carried out offline. That is to say, the knowledgebase portion is selected and stored at the memory element 35 prior to subsequent operation to extract a context pursuant to operation of an implementation of the present disclosure. The knowledgebase portion is, sent or otherwise provided to the device 14 and received at receiver (Rx) 44 of the device 14. The receiver 44 forms part of a device transceiver, of which a transmitter (Tx) 48 is also shown in Figure 1.

The slicing unit 33 selects a portion of the knowledgebase 28 to be stored at the memory element 35. The slicing unit 33 is also provided with indications, i.e., slicing criteria information, here represented to be provided by way of lines 36, of relevant applications and services of interest, e.g., services and applications subscribed to or maintained at the device 14. A list 56 at the device 14, e.g., contains entries that identify the applications and subscriptions. Indications of the entries are provided to the apparatus 31 and form the indications are provided by the way of the lines 36. The slicing unit 33 selects the portion of the knowledgebase 28 that is to be stored at the memory element 35 through analysis of the list entries of the list 56. The slicing of the knowledgebase discards data that is considered to be irrelevant to existing service subscriptions or applications. The slicing is performed based on two factors. One factor is the number of mindsets that are required to be detected, determined, for instance, by a service subscription. For instance, if a subscribed service indicates an interest in "buying car insurance", "flight and airline deals", and "real estate" mindsets, all data unrelated to these mindsets are purged from the knowledgebase. An additional factor is a parameter referred to as the semantic radius. The semantic radius is determinative of how far a concept can be from a given mindset and still be considered relevant to that mindset. The radius is determined based on the structure of the knowledgebase and the definition of the mindsets. Once the radius is specified, all data outside of the range indicated by the radius is purged from the knowledgebase through operation of the slicing unit, thereby also to reduce the size of the resultant, knowledgebase portion that is stored at the memory element 35.

The slicing unit 33 further creates a semantic distance matrix and appropriate search indices for subsequent operation so that a run-time search is performable in real-time. Pre-calculation of semantic distances and search indices decrease related costs including, e.g., battery consumption.

The sliced knowledgebase 37, once stored at the memory element 35, permits subsequent access to the knowledgebase portion irrespective of connectivity of the device 14 with the network 22 or database server 18. Due to the slicing of the knowledgebase 28 and storage of only a portion at the memory element 35, a heightened possibility of a failed match to obtain a true mindset during subsequent operation is possible. In the exemplary implementation, to facilitate a scenario in which performance outweighs the consideration for use of the knowledgebase 28, necessitating the connectivity by way of the network 22, if a context extraction is not successful using the knowledgebase portion maintained at the memory element 35, subsequent connectivity to the knowledgebase 28, such as by way of the network 22, is carried out. In the exemplary implementation, the creation of the connection requires user consent. In a further implementation, if access to the knowledgebase 28 does not produce positive results, a request is made to a third layer, which is, e.g., the linked data network of a semantic web community. For example, if a subscribed mindset is "interested in cars", the knowledgebase-portion structure is hyponymy graph, and the semantic radius is two, the mindset is defined by a category called "automobiles". When following the hyponymy graph downward, a first step contains "car classifications", the second step contains "SUVs", and the third step contains "compact SUV". As the "compact SUVs" category is three steps away from the category that defines the "interested in cars" mindset and is beyond the semantic radius of two, any concept related to compact SUVs is not detected in the mindset. However, if access to the network-based mindset detection is feasible and allowed, the data entries are sent to the server 18 in which the entire hyponymy graph is available in the knowledgebase 28.

The choice of the knowledgebase 28, used by the slicing unit 33 to form the knowledgebase portion forming the sliced knowledgebase 37 that is stored at the memory element 35, is important in the ultimate operation of an apparatus 38 of an implementation of the present disclosure. In one implementation, a publically-accessible knowledgebase, such as the Wikipedia database, forms the knowledgebase.

The device 14 further includes the apparatus 38 of an implementation of the present disclosure. The apparatus is implementable in any desired manner, including hardware, firmware, and software implementations. In one exemplary implementation, the apparatus 38 is implemented by program code executable by processing circuitry.

In the exemplary implementation, the apparatus 38 includes an entry processing unit 62, a matching unit 68, and the sliced knowledgebase 37. The entry processing unit 62 is configured to be provided with indications of inputs entered by way of the user interface 66. The inputs include textual information, such as keypad entries as well as indications of selection of applications and services entered by way of the user interface or otherwise selected. The entry processing unit operates to translate the provided information into pruned formatted text. In one implementation, the behavior of the entry processing unit is pre-determined for each type of entry. The input entered by way of the user interface indicates the mindset of the user. The entry is in any of various forms including text, application selection, web page browsing, or implicit contextual information, such as GPS location information. The unit 62 converts the received information into the pruned formatted text (PFT).

The apparatus 38 further includes a matching unit 68 to which the pruned formatted text formed by the entry processing unit 62 is provided. The pruned formatted text, in the exemplary implementation, is cleaned of general information and is formatted by separators into well-separated phrases, herein referred to as key-phrases.

The matching unit 68 matches a provided PFT to a best-possible mindset using the sliced knowledgebase stored at the memory element 35. The matching unit generates an indication of a current mindset, here represented to be generated on the line 72. The current mindset is the latest user mindset responsive to the entered information by way of the user interface or otherwise derived.

The behavior of the apparatus 38 depends upon the definition of a mindset. In exemplary implementations, a mindset is topic-based. In another implementation, the mindset is super-concept based.

Topic-based mindset structure is a simple way of defining a mindset using a set of topics. All the effort needed for this structure is to find all the relevant topics in the knowledgebase that represent what the mindset is about and select those as the definition of the mindset. For instance, if the knowledgebase is Wikipedia and the topics are represented by categories, to define a mindset labeled "Car", these categories can be selected: "Automobiles" and "Vehicles". To create higher flexibility and cover mindsets which contain a combination of different topics, a parameter is added to mindset definition, called a group number. Each topic in a mindset definition would have a group number attached which determines to which group this topic belongs. The topics within one group may point to the same subject while different groups represent different subjects. To illustrate, the mindset "Car Insurance" can be defined by two groups of topics. In group 1, topics try to represent the subject of "Car" and have the following categories: "Automobiles" and "Vehicles". Topics of group 2, on the other hand, represent the subject of "Insurance" by including these categories: "Insurance", "Insurance Terms", and "Types of Insurance". The implementation of groups in the mindset definition may also provide the possibility to define more complex mindsets such as "Car/Home Insurance".

In this case, the first group represents categories related to either 'car' or 'home' and the second group represents 'insurance'. Grouping in such form can be mapped to a conjunctive normal form. Finally, to provide ultimate functionality, a mindset definition can permit the inclusion of limited individual concepts. There are cases where a concept cannot be effectively or completely described by topics or there are linguistic limitations to knowledgebase entries. In such cases, it might be easier to provide the ability to add individual concepts to the mindset definition.

As a case in point, defining the mindset "Buying Cars" might not be perfect having Wikipedia as the knowledgebase. The reason for that is while the "Car" is easily described by categories, "Buying" does not have proper representatives in Wikipedia category graph. Categories 'Sales' and 'Trade' might be used as topics to define "Buying" but since Wikipedia is an encyclopedia rather than a dictionary, required verbs such as 'buy', 'purchase', and 'finance' and their inflectional variants might not be found in any of the topics. In this case, these words can be added to the group representing the "Buying" part of the mindset. The advantage of such topic-based mindset definition is the simplicity of definition which requires minimal manual labor by the designer. Moreover, the manual definition is often enough and not much automatic improvement is needed. The exception is when a mindset has been defined by individual concepts. In this case an automatic process can be initiated afterwards to add inflectional forms of manually selected concepts using a grammatically structured knowledgebase. For instance, if 'buy', 'purchase' and 'finance' are added to a mindset definition, using a knowledgebase such as WordNet, the following will be added to the mindset definition automatically: 'buys', 'buying', 'bought', 'purchases', 'purchasing', 'purchased', 'finances', 'financing', 'financed'. Alternatively, instead of adding above forms to the mindset definition, a *grammatical stemmer unit* might be added to the EPU so that user entries will match the main forms of concepts in the mindset definitions.

In a super-concept-based structure for mindset definition, an intermediary, referred to as a *super-concept,* is utilized. In this structure, mindsets are directly defined by a set of concepts instead of a set of topics. However, concepts are first grouped into super-sets and then each mindset is defined by these super-sets, which are called super-concepts. A super-concept is defined by a set of concepts about a certain subject plus a weight for each concept representing how close is that concept to the subject of the set.

Therefore, SC = {(Cᵢ, Wᵢ)} in which SC, Cᵢ, and Wᵢ represent a super-concept, a concept, and its weight respectively. Each Cᵢ is, e.g., a title in Wikipedia and weights are within the range (0, 1] where Wᵢ =1.0 represents the highest relevancy of a concept to the subject of the super-concept and the lesser values of weights represent lower relevancies. If a concept is not relevant to a super-concept, the concept will not be included in the set and therefore no concept can have a weight of zero in the definition of a super-concept.

As an example, a super-concept called 'Car' is defined by a comprehensive list of concepts about cars such as brands, models, or vehicle technologies. Examples include, for instance: ('BMW', 1.0), ('Camry', 1.0), and ('Braking system', 0.6). Once the required super-concepts are defined, a mindset can be defined based on disjunctive normal form (DNF) of super-concepts. This is the reverse of grouping in topic-based mindsets. The distinction is that here elements within each group are connected together by logical AND operators while groups are connected to each other by logical OR operators. For instance, given 'Car', 'Home', and 'Insurance' super-concepts, "Car/Home Insurance" mindset would be defined as: ('Car' AND 'Insurance') OR ('Home' AND 'Insurance'). The main advantage of super-concept-based mindsets lies in the definition of super-concepts. First, super-concepts are localized and focused on a single subject. Additionally, once defined, super-concepts can be reused in multiple mindset definitions. Third, super-concepts provide ultimate flexibility in defining mindsets and moreover, presenting the possibility of mindset definition on-the-fly, i.e. once a number of super-concepts are defined, any combination of them can create new mindsets dynamically. Finally, super-concepts directly connect mindsets to concepts. This reduces the size of knowledgebase by eliminating the overhead space required to keep topics and their connections to concepts. Furthermore, the simplification made by direct connection of concepts to mindsets facilitates the job of slicing unit and matching unit. A challenge in defining super-concepts pertains to how to produce a complete list of concepts related to a subject and how to assign appropriate weights to them. Numerous text classification methods are utilized. Methods include incremental algorithms which start from an initial list and improve upon the initial test by finding new connections to the already-added concepts. Since super-concept definition is performed offline, fairly complex algorithms can be applied.

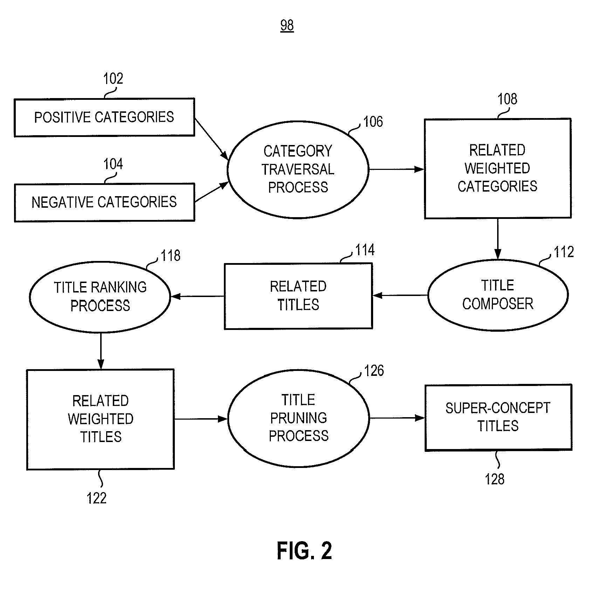

Figure 2 illustrates a representation of an exemplary process 98 representative of learning of a super-concept mindset. The learning process utilizes minimal user interaction and is similar to a topic-based mindset definition, provided, e.g., through use of a Wikipedia-type knowledgebase as the knowledgebase.

Positive and negative categories 102 and 104 are provided to a category traversal process, here indicated at 106. Related weighted categories are identified by the block 108, and a title composer is indicated by the block 112. Related titles are indicated by the block 114, and a title ranking process is performed, indicated by the block 118. Related weighted titles are identified, indicated by the block 122, and a title pruning process is performed, indicated by the block 126. Super-concept titles are provided, indicated by the block 128.

To jump-start a super-concept definition, an expert introduces the positive and negative categories 102 and 104, i.e., positive and negative topics, to a super-concept learning procedure. The categories are traversed downward in a category graph by the category traversal process 106 in order to produce sub-categories of both the positive and negative categories. Subsequently, only positive categories or sub-categories, which do not appear in the negative category hierarchy, are kept. Then, each remaining positive, sub-category is scored with a weight based upon how many of the parents of the respective subcategories are still among the remaining positive category hierarchy. Here, the title composer 112 then produces a list of titles belonging to the positive weighted categories, and the results are passed to the ranking process that, in turn, assigns each title a weight based on the weight and number of the positive categories to which each title belongs. If any of the titles has a category that is in a negative category hierarchy, the title is removed during the title pruning process 126. The result is the super-concept list of titles or concepts 128.

Operation of the slicing unit 33, shown in Figure 1, is dependent upon the mindsets structure. In a topic-based mindset structure, the mindsets are primarily defined by topics. In order to calculate the relative concepts, a topic graph is traversed.

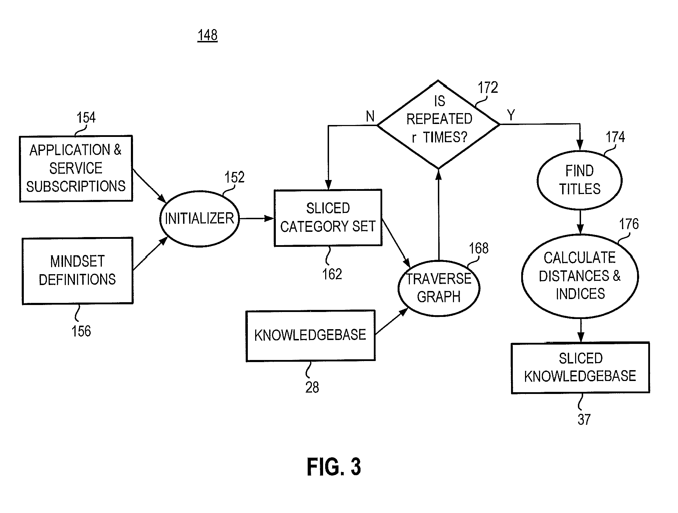

Figure 3 illustrates a process 148 representative of exemplary operation of the slicing unit 33 pursuant to an implementation of the present disclosure. An initialization process, represented by the initializer 152, is provided with indications of application and service subscriptions 154 and mindset definitions 156. Indications are used by the initializer 152 to produce the initial sliced category set 162. Indications of the sliced category set and knowledgebase 28 are utilized to traverse, indicated by the block 168, a topic graph. A determination is made, indicated by the decision 172, as to whether the graph traversal has been repeated r times. If not, new categories are added, and a path is taken back to the block 162. Otherwise, the yes branch is taken to the block 174. Titles are located, and, as indicated by the block 176, distances and indices are calculated. A sliced knowledgebase is then formed, indicated by the block 37.

In the exemplary implementation, a slicing algorithm, defined by program code executable by processing circuitry, is utilized. The slicing algorithm forms a graph traversal algorithm that utilizes a semantic radius parameter r. The algorithm commences by creating an initial set of sliced categories. The initial set is populated by adding all of the categories defining the subscribed mindsets. As indicated by the decision block 172, an r-step loop is executed. In each step, all of the parents and children of unvisited categories in the sliced set are added to the set. At the end of the group, any category with the distance of r or less from any of the categories defining the subscribed mindsets is included in the sliced set. Once the sliced category set is fully populated, all of the titles connected through any of these categories are added to the sliced title set. The final set of the algorithm is to compute the distance between all of the sliced categories and subscribed mindset categories that are needed in a matching unit. Data included in the sliced knowledgebase is indexed for fast retrieval during operations to obtain a current mindset by the matching unit 68.

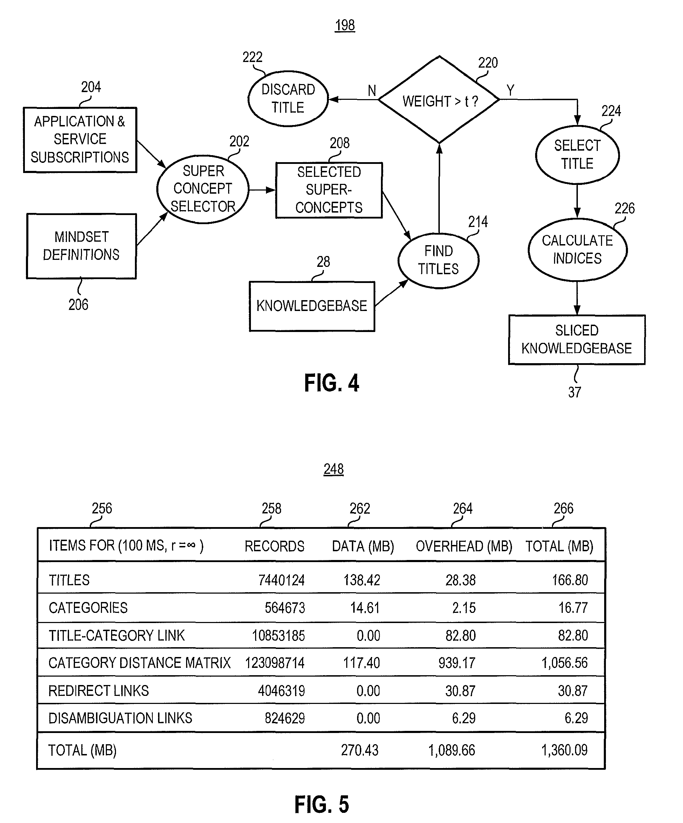

Figure 4 illustrates a process 198 related to slicing of super-concept-base mindset. Here, a super-concept selection process, indicated by the super-concept selector 202 is provided with application and service subscription information and mindset definitions, indicated by the blocks 204 and 206, respectively. Selection is made of super-concepts, indicated by the block 208. A find titles process is performed, indicated by the block 214 to which the super-concepts 208 and knowledgebase information, indicated by the block 28, is provided. A threshold determination is made at block 220 as to whether the weight is greater than t. If not, title is discarded, indicated by the block 222. If the weight is greater than t, the yes branch is taken from the block 220 and a title is selected, indicated by the block 224, and indices are calculated, indicated by the block 226. The knowledgebase is sliced, indicated by the block 37.

The process 198 is straight forward. As the effort of learning concepts of each super-concept and the wait is already performed, all that is required to slice the knowledgebase is to identify the subscribed mindsets, identify super-concepts in the subscribed mindsets, select all of the concepts in the identified super-concepts that have a weight higher than a certain threshold (called t), and store the selected concepts and their weights together with search indices into the sliced knowledgebase. The semantic radius parameter of Figure 3 is transformed to a semantic threshold here. If the semantic radius, r, in the range of [0,1], indicates a normalized distance, with zero being the closest and one being the furthest, the semantic threshold, t, is defined as t = 1-r. The semantic threshold is in the range of [0,1] but is comparable to concept weights. For instance, if a radius of 0.6 is selected, all concepts with weights less than 0.4 are excluded from the super-concept definitions.

The entry processing unit 62, shown to form a portion of the apparatus 38, illustrated in Figure 1, is implemented in a manner that is dependent upon the types of entries available to a user by way of the user interface 66. The entry processing unit first classifies user entry into a known type and then processes the entry based upon pre-determined procedures of the entry processing unit. In the exemplary implementation, the complexity of processing of each entry type varies, depending upon the import associated with each type of entry. For instance, if the entry entered by way of the user interface comprises a website URL, merely extracting metadata is permitted or, alternately, parsing of the text body of the web page is also possible. If, e.g., the entered textual information identifies a selected application, metadata available in an application-stored database that describes the application is extracted. In one implementation, the entry processing unit 62 further provides the capability to break a large text into connected words. Word-breaking techniques are used to produce phrases. The entry processing unit returns a pruned formatted text that, in the exemplary implementation, is comprised of, separated, key phrases that are provided to the matching unit 68.

The matching unit 68, shown in Figure 1, utilizes the pruned formatted text provided by the entry processing unit and determines a best mindset match of the sliced knowledgebase maintained at the memory element 35. The manner by which the pruned formatted text is mapped to a mindset is dependent upon the definition of the mindsets and the structure of the sliced knowledgebase. In an implementation in which the mindsets are topic-based, the matching unit determines a path between key-phrases (KP) of pruned formatted text and mindsets starting from the key phrases to titles that feature any of the key phrases to categories of the titles to categories defining mindsets and, ultimately, the mindsets.

Each key phrase from a pruned formatted text is matched to any title that contains any of the key-phrase words. A partial match creates a score based upon the extent of the similarity of the title and the key phrase. Subsequently, all categories of located titles are identified, and the linked to the corresponding key phrases. Then, each key phrase and its categories are scored based upon the average of title scores connecting them. Afterwards, the distance between the categories defining mindsets and categories of key phrases are obtained from a distance matrix. The mindsets are then ranked and scored based upon a function of key phrase category scores and their distances to the mindset categories. The function, in one implementation, attempts to maximize the score and minimize the distance of the best-matched mindset. Moreover, the function considers the groupings of topics in the mindset definition. Mindsets that are missing links from key-phrase categories to one or more of their groups are discarded or penalized. If a top-most mindset has a score above a given threshold, it is returned and considered to be the current mindset. In an implementation in which the mindset are configured to be super-concept-based mindsets, the matching unit 68 also searches for titles that partially match key phrases of the provided pruned formatted text. Titles that match less than a threshold, such as 0.9, are discarded. As the titles are from super-concept definitions, a list of super concepts, containing remaining match titles, is compiled. If any combination of super concepts satisfies a conjunction clause of a mindset DNF, the mindset is returned. Therefore, in this implementation, it is possible for the matching unit 68 to return multiple mindsets.

Figure 5 illustrates a table 248 of characteristics of a knowledgebase of an exemplary one hundred mindsets prior to performance of slicing operations. As indicated in the representation, the total size of the knowledgebase is 1.33 GB, i.e., 1,360.9 MB, shown in the bottom right corner (as shown) of the representation. Columns defined in the knowledgebase include an items column 256, a records column 258, a data column 262, an overhead column 264, and a total column 266. The items in the columns 256 are of items of the database. The number of records, the amount of data, and the amount of overhead for each of the identified items is displayed n the table 248 representative of the entire knowledgebase.

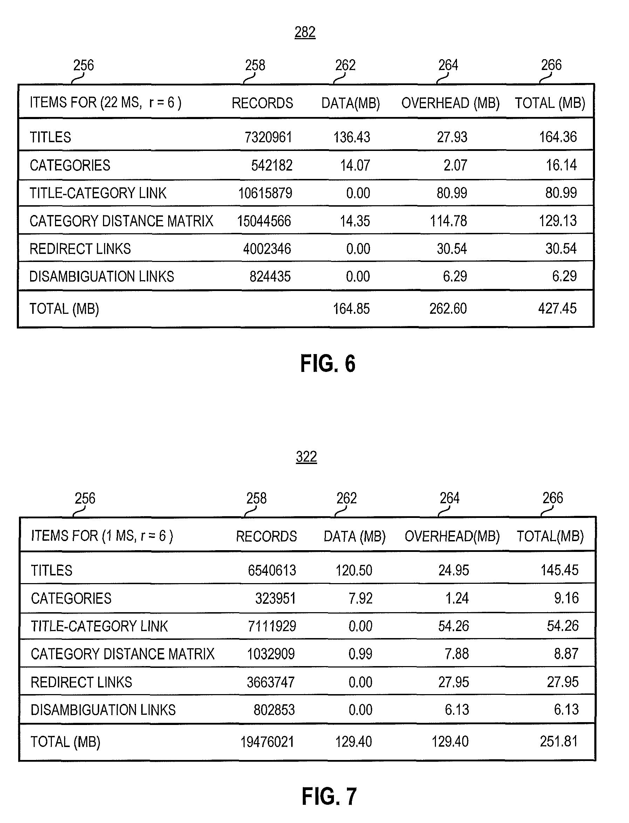

Figure 6 illustrates a table 282, similar to the table 248 shown in Figure 5. The table 282 is of reduced size, here indicated to be 0.42 GB, that is, 427.4 MB shown in the lower right corner (as shown) of the table, relative to the table 248. In the illustrated implementation, the knowledgebase utilizes a topic-based mindset definition. When slicing is performed, a number of mindsets are selected as subscribed mindsets. Then, a semantic radius is passed to the slicing unit 33. The table 282 is representative of a sliced knowledgebase with twenty-two subscribed mindsets and a semantic radius of six. The total size of the knowledgebase is reduced by 69 percent.

Figure 7 illustrates a table 322, similar to the tables 248 and 282, shown in Figures 5 and 6, respectively. The table 322 illustrates an exemplary representation of the minimum size required to store a single mindset for a semantic radius of six. The required size is 0.25 GB, that is, 251.81 MB, as shown, in the lower right portion of the table 322 of Figure 7. Comparison of Figures 5, 6, and 7 shows how the reduction in the number of subscribed mindsets affects size of the knowledgebase.

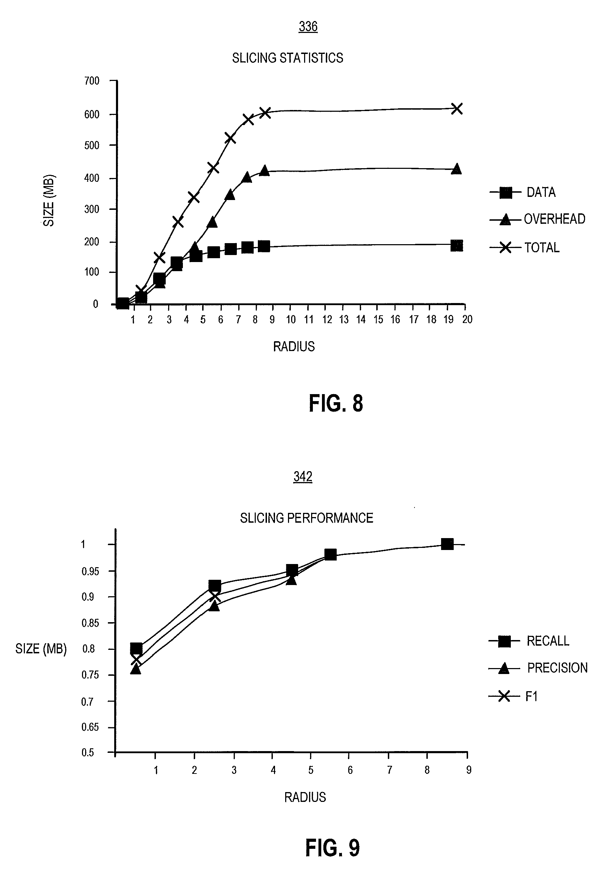

Graphical representations 336 and 342 shown in Figures 8 and 9, respectively, illustrate the effect of the semantic radius on both the size of the knowledgebase and the performance of matching units for a data set. The graphical representation 342 indicates that a radius of six is a radius above which the performance starts to converge to a plateau over 0.98. However, the graphical representation 336 indicates that the ratio of six is the threshold where the size starts a sudden increase in overhead data. Therefore, a radius of five might be a better choice, depending upon whether F₁ = 0.94 is an acceptable option. Otherwise, the trade off is to select a radius of six to achieve a higher performance with a little cost of required space.

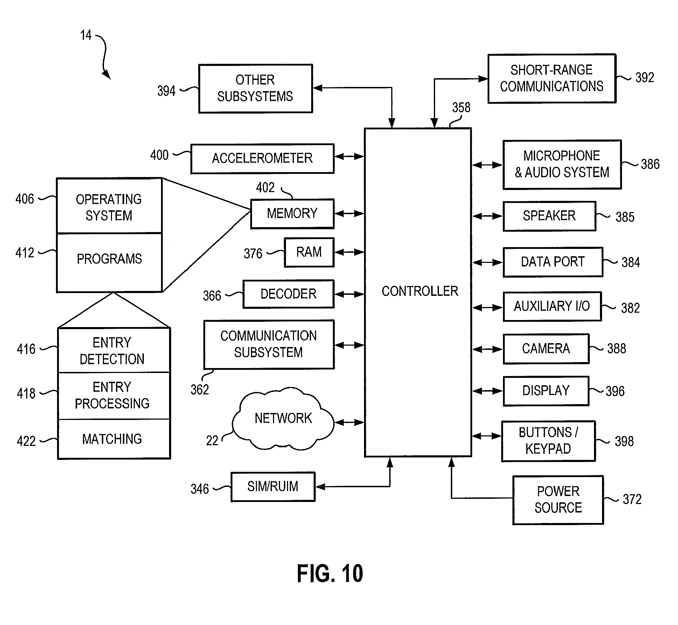

Figure 10 illustrates a device 14 of an exemplary implementation of the present disclosure. In the implementation shown in Figure 10, the device 14 forms a wireless device, such as a smart phone, tablet computing device, or other radio device. In other implementations, the device is constructed in other manners to provide other functionalities. In such other implementations, the configuration of the device is correspondingly altered to provide the functionalities of such other devices.

The device 14 includes a controller 358. The controller is implemented by any of various appropriate processors or other control circuits. The controller 358 controls overall operation of the device, including control of voice, data, and command communications, which are implemented by a communication subsystem 362. The communication subsystem 362 includes a receiver and a transmitter. The communication subsystem 362 is used, amongst other things, to initiate and to support an active voice call or data communication sessions. The communication subsystem 362 is comprised of any of various combinations of hardware, software, and firmware to perform various designated functions. The software is functionally or conceptually divided into software modules. Software in one module is able to share or to call upon functions of another module.

Data received by the communication device is process by a decoder 366, which performs decompression operations. The device 14 receives information from, and sends information to, the network 22. The communication subsystem 362 facilitates, for instance, initiation and operation of an active call when the communication device is in a real-time, voice communication session.

A power source 372 provides operative power to operate or to charge elements of the communication device. The power source is implemented, for example, with one or more rechargeable batteries or a port to an external power supply. The controller 358 interacts with additional components of the communication device, here including a RAM (Random Access Memory) 376, and auxiliary i/o (Input/Output) subsystem 382, a data port 384, a speaker 385, a microphone and audio system 386, and camera module 388, a short-range communication system 392, and other subsystems 394. The controller 358 further interacts with the display 396 and input buttons or an input keypad 398.

A user of the device 14 is able to enter data and to operate functions of the device 14 by way of appropriate entries entered at the buttons or keypad 398 of the user interface 66. The controller 358 further interacts with an accelerometer 400 that detects a direction of gravitational forces or user-input acceleration forces. Contents of the SIM card 346 are also accessible by the controller 358.

The device 14 further includes an operating system 406 and software programs 412 formed of program code. The operating system 406 and the software programs 412 are executed by the controller 358 during operation of the communication device. The operating system 406 and the software programs 412 are stored, for example, at a persistent, updatable store, such as the memory 402. Additional applications or programs can be loaded by way of the network 22, the auxiliary i/o subsystem 382, the data port 384, the short-range communication subsystem 392, or another subsystem 394 that is suitable for transferring program files. The sliced knowledgebase is also stored at the memory 402 or other location.

The software programs 412 include software modules. Here, software modules associated with obtaining a current mindset are illustrated. The modules include an entry detection module 416, an entry processing module 418, and a matching module 422. The entry processing module 418 and the matching module 422, when executed, provide the functionality of the entry processing unit 62 and the matching unit 68 described with respect to the apparatus, shown in Figure 1.

During operation, the entry detection module 416 is invoked and detects entry of information, as above-described. The entry processing module 418 is invoked and operates to form a pruned formatted text representation of the entered information. The matching module 422 utilizes the pruned formatted text to match the text with the information of the sliced knowledgebase to obtain a current mindset of the user.

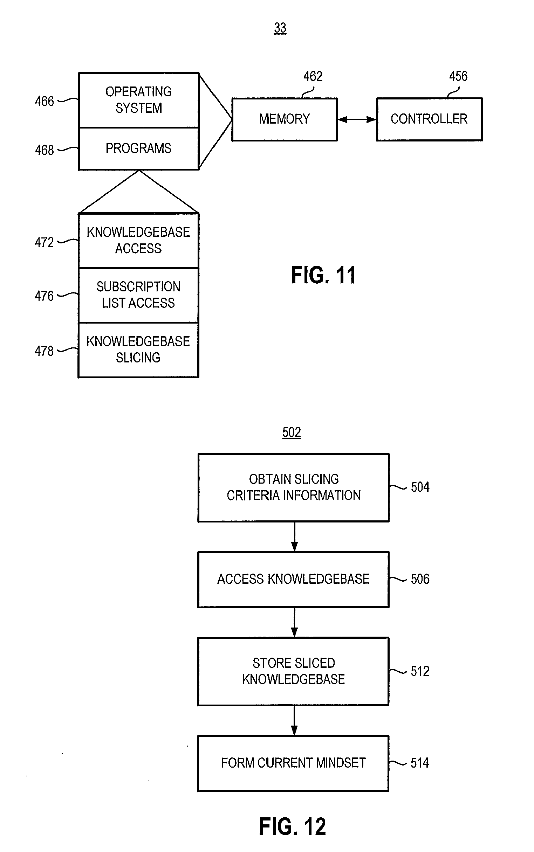

Figure 11 illustrates a functional block diagram of the slicing unit 33 of an implementation of the present disclosure. The slicing unit includes a controller 456 that operates to execute programming code stored at the memory 462. An operating system 466 and programs 468 forming the program code are illustrated in Figure 11.

The programs 468 here include a knowledgebase access module 472, a definitional and subscription list access module 476, and a knowledgebase slicing module 478. In operation, the modules 472 and 476 are invoked to obtain application and service subscription information and mindset definitions together with a knowledgebase, such as an entire knowledgebase, e.g., a Wikipedia knowledgebase. Slicing module 478 is invoked to slice the accessed knowledgebase to form a sliced knowledgebase. Slicing is dependent upon the application in service subscription information and the mindset definitions.

Figure 12 illustrates a method flow diagram 502 representative of the method of operation of an implementation of the present disclosure. The method facilitates mindset detection at a device.

First, and as indicated by the block 504, slicing criteria information is obtained. The slicing criteria information includes, for instance, information relating to application and service subscriptions and mindset definitional values. Then, as indicated by a block 506, a knowledgebase is accessed, and the knowledgebase is sliced in a manner dependent upon the slicing criteria information.

Thereafter, at a device, such as a wireless device, the sliced knowledgebase is stored, indicated by the block 512. And, as indicated by the block 514, the knowledgebase portion maintained at the device is accessed, such as by a matching module, to form a current mindset.

Once the sliced knowledgebase stored at the device, the current mindset of a user is ascertainable while operating the device as a standalone unit. As the sliced knowledgebase contains mindset information permitting the current mindset to be ascertained, access to a remote location is not required.

Presently preferred implementations of the disclosure and improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for a device, said apparatus comprising:
a memory element embodied at the device and configured to store a portion of a knowledgebase; and
a matcher configured to match an indication of an entered mindset with a relevant part of the portion of the knowledgebase, a match identified by said matcher forming a current mindset.

2. The apparatus of claim 1wherien the portion of the knowledgebase stored at said memory element comprises selected stored mindsets and concepts within a selected semantic radius.

3. The apparatus of any of claims 1-2 wherein said matcher is configured to match key-phrase parts of the entered mindset with the relevant part of the portion of the knowledgebase.

4. The apparatus of claim 3 further comprising a key-phrase determiner configured to ascertain the key-phrase parts of the entered mindset.

5. The apparatus of any of claims 1-3 wherein the indication of the entered mindset comprises an indication of entered text.

6. The apparatus of any of claims 1-5 wherein the indication of the entered mindset comprises an indication of implicit contextual information.

7. A method for facilitating mindset detection at a device, said method comprising:
obtaining slicing criteria information; and
slicing a knowledgebase into a knowledgebase portion, in a manner responsive to the slicing criteria information.

8. The method of claim 7 further comprising:
storing the knowledgebase portion at the device; and
accessing the knowledgebase portion maintained at the device to form a current mindset.

9. The method of claim 8 wherein said accessing further comprises matching an indication of an entered mindset with the knowledgebase portion.

10. The method of claim 9 wherein said matching comprises matching key-phrase parts of the entered mindset with the knowledgebase portion.

11. The method of claim 10 further comprising ascertaining the key-phrase parts of the entered mindset.

12. The method of any of claims 7-11 wherein the slicing criteria information obtained during said obtaining comprises installed application related information.

13. The method of claim 7 wherein the slicing criteria information obtained during said obtaining comprises service subscription information.

14. The method of claim 7 wherein the slicing criteria information obtained during said obtaining comprises a listing of predefined mindsets.

15. The method of claim 7 wherein the slicing criteria information obtained during said obtaining comprises entered textual information.
